# EUROPEAN PATENT APPLICATION

(11) **EP 1 720 264 A1**
(43) Date of publication of application: **08.11.2006**
(21) Application number: 05009708.8
(22) Date of filing: 03.05.2005
(51) Int. Cl.: H04B 7/005

(54) **Method for reducing interference in a radio communication system**

(71) Applicant: SIEMENS AKTIENGESELLSCHAFT, 80333 München (DE)
(72) Inventor: Klein, Axel, 81737 München (DE); Krause, Jörn Dr., 12107 Berlin (DE); Viering, Ingo Dr., 81539 München (DE); Zuck, Josef-Peter, 85551 Kirchheim/Heimstetten (DE)

(57) **Abstract**

According to the invention, a method is proposed for reducing interference in a radio communication system, wherein
at least one data channel (DPDCH) for transmitting to and/or from a user terminal and at least one associated control channel (DPCCH) are established between said user terminal and at least one base station of the radio communication system. The method is characterised in that when it is detected that no data is to be transmitted on the data channel, the transmission power of the associated control channel (DPCCH) is reduced and/or a transmission of at least one parameter (CQI) relating to determined channel characteristics is stopped.

## Description

The invention relates to a method and components of a radio communication system for reducing interference in such system.

In radio communication systems such as UMTS (Universal Mobile Telecommunication System) which is standardised by the 3GPP (Third Generation Partnership Project), information such as speech, video data etc. is transmitted over an air interface between base stations of the system and mobile or fixed user terminals.

In the framework of the UMTS standardisation, also the so called Enhanced UMTS Uplink Channel (E-DCH) is being standardised as a new dedicated transport channel for the uplink. Reference is thereby made to ch. 4.1.1.2 of the technical specification 3GPP TS 25.211 V6.4.0 (2005-03), "Physical channels and mapping of transport channels onto physical channels (FDD) (Release 6)". According to ch. 5.2.1 and 5.2.1.3 of said specification, the E-DCH is transmitted in the so called uplink E-DCH Dedicated Physical Data Channel (uplink E-DPDCH) and corresponding uplink E-DCH Dedicated Physical Control Channel (uplink E-DPCCH). Further description of the E-DCH channel could be found in the technical specification 3GPP TS 25.808 V6.0.0 (2005-03), "FDD Enhanced Uplink; Physical Layer Aspects (Release 6)" sowie 3GPP TS 25.309 V6.2.0 (2005-03), "FDD Enhanced Uplink; Overall description; Stage 2 (Release 6)". In ch. 5.1.2 of the technical specification 3GPP TS 25.214 V6.5.0 (2005-03), "Physical Layer Procedures (FDD) (Release 6)", methods for controlling the transmission power of the different DPDCH and DPCCH channels are given. In addition, reference is made to the so called High Speed Downlink Packet Access (HSDPA) described in 3GPP TS 25.308 V6.3.0 (2004-12) "High Speed DownlinkPacket Access (HSDPA); Overall description; Stage 2 (Release 6)".

The number of users that can stay connected within a radio cell, but without being involved in active data transmissions, is in general limited by the resources assigned to the user's dedicated physical control channels (DPCCH). While the resources required for actual transmission of traffic data can be dynamically released and reallocated through fast scheduling schemes (on HS-DSCH (High Speed Downlink Shared Channel) in downlink and E-DCH in uplink), the physical control channels are transmitted continuously and thus occupy their allocated resources throughout the time of connection.

This has been recognized for the downlink, where the number of users that could be mapped on HS-DSCH was severely limited by the spreading codes required for their associated dedicated channels. This led to the introduction of the so called Fractional DPCH (F-DPCH) concept, which allows a higher number of HSDPA users to maintain their downlink DPCCH control channel within a limited amount of available code resources. By reducing the information transmitted on the F-DPCH to the required minimum, i.e. TPC commands for the uplink power control, the F-DPCH also alleviates potential power and interference limitations that may be raised by a larger number of control channels.

Dedicated control channels in uplink, however, create a similar limiting effect, not through the required spreading codes but because of their contribution to the overall noise rise which can not be allocated for user data transmission and thus, limits the system's spectral efficiency. This is not an issue for circuit-switched connections with a substantially continuous transmission of signals and wherein the user's contribution to the noise rise is dominated by data channels. However, the expected trend towards packet based services with strongly varying data rates and even long pauses between transmission bursts (as e.g. in typical web traffic) leads to traffic patterns wherein a large number of users can be supported by sharing the traffic resources over time, but which is also required for their efficient utilisation. With a large number of users being configured for high data rates (that are only scarcely utilised), the interference arising from their corresponding uplink control channels becomes one of the main limiting factors as is shown in the following exemplary calculation.

Analysis of typical power configurations for packet services at high data rates on UL DCH show that more than 1% of the total allowed noise rise must be allocated to a single DPCCH (for PS64), rising up to 2.5% with higher data rates or higher mobile velocity. Assuming that E-DCH will require a similar control channel power under similar conditions (i.e. during data transmission on E-DPDCH), an assumption of a 1% noise rise target per E-DPCCH could be regarded as being rather optimistic, even when considering a higher total allowed noise rise in E-DCH configurations. Note, that without further measures the same control channel power will be maintained while E-DPDCH is idle, because the serving RNC (SRNC) would not be able to adjust the outer loop power control due to a lack in received data.

When HSDPA is configured in downlink, the corresponding uplink control channel (HS-DPCCH, carrying the CQI reports and HARQ acknowledgements) is transmitted with a given ratio to the UL DPCCH, which can be set between 1/3 and 3 but is typically configured at 1, i.e. equal power on DPCCH and HS-DPCCH. In idle periods with no downlink transmissions, no ACK/NACKs will be transmitted either, which reduces the noise rise contribution of HS-DPCCH by 1/3 but still leaves a total of 1.67% for the uplink control channels of a single user (if CQI reports are transmitted every TTI). This means, that 60 users configured for HS-DSCH and E-DCH will already produce 100% of the total allowed noise rise with their control channels alone, i.e. without transmitting a single bit of traffic data. In turn, when allowing e.g. 20% of the noise rise budget to be sacrificed for control channels, this would limit the system to only 12 (simultaneously connected) users.

In order to allow for a higher number of users without further reducing the spectral efficiency, channel-type switching can be applied, effectively releasing the dedicated channels (and their occupied resources) during idle periods. This comes at the penalty of a significant delay for re-establishment of the channel when the transmission of traffic data is resumed. This solution is not regarded as sufficient for the Web-like traffic scenarios envisaged on HSDPA/E-DCH cell configurations. Actually, F-DPCH has been introduced exactly for the purpose to allow more users (in downlink) without the need for channel-type switching - and therefore, an uplink solution should also support a similar high number of users that can remain connected without channel-type switching and its inherent delay penalty.

In the following exemplary description, user connections configured on HS-DSCH and E-DCH are considered, i.e. without additional DPDCH in uplink or downlink. The signaling radio bearer (SRB) for higher layer signaling is assumed to be mapped on HS-DSCH in downlink (as is necessary for F-DPCCH) and on E-DCH in uplink (which is no significant restriction, as non-scheduled transmission can be applied). Nevertheless, the same principles might be applied to normal DCH channels. In such configuration, a user transmits the DPCCH, the HS-DPCCH, the E-DPCCH and the E-DPDCH in uplink. The latter two are automatically DTXed (Discontinous Transmission) when no data (or rate requests) need to be transmitted on E-DPDCH. The former two are transmitted at a power which would produce between 1.0 and 1.67% of the maximum allowed noise rise at the receiving base station (depending on the CQI reporting cycle) .

The concept according to the invention is based on a substantial reduction of the transmitter power and thus, the generated noise rise, of the UL DPCCH during idle traffic periods, i.e. when nothing needs to be transmitted on the E-DPDCH data channel, and/or to stop the CQI reporting (thus eliminating the interference from HS-DPCCH) when no data are transmitted in downlink.

According to the invention, traffic conditions on the data channels (in terms of the MAC buffer state) are monitored and the power control mode and/or CQI reporting mode changed accordingly between the user terminal and the serving base station (for E-DCH and HSDPA). One important characteristic of the concept is that these changes do not involve the RNC, so that long delays of radio ressource control (RRC) procedures and the associated NBAP as well as higher layer signaling, which might take more than 100 ms, are avoided.

According to a first aspect of the invention, the absence of data to be transmitted on HS-DSCH or E-DCH can be detected by observation of the current occupation of the MAC-hs and MAC-e buffers. A timeout, e.g. starting when a buffer runs empty, may be used in order to avoid unnecessary mode switchings during short traffic transmissions. The inactivity can be detected in the (serving) base station for both directions: as the MAC-hs buffer is located in the base station and the MAC-e buffer state is known by the MAC-e scheduler in the base station through regular rate requests from the user terminal.

According to a second aspect of the invention, the periodic CQI reporting (as configured by RNC) is switched off when data inactivity on the downlink is detected. The serving base station informs the user terminal by physical layer signaling. This might be implemented as a new signaling message on HS-SCCH, applying e.g. one of the 8 unused bit combinations within the 7 bits used for the channelisation code set. On receiving such message, the user terminal will immediately stop the transmission of CQI reports on HS-DPCCH, but save the RNC-configured reporting cycle to be restored at reactivation time.

According to a third aspect of the invention, when detecting the inactivity condition in uplink as described above, the serving base station reduces the target signal to interference ratio (SIR) for the uplink power control from the last value configured by the RNC by a preconfigured offset, e.g. by 3-6 dB. The inner loop power control for the uplink will automatically reduce the Tx power on the UL DPCCH (by a sequence of "power down" steps) to adjust to the new target. Note, that an autonomous reduction of the SIR target is not in conflict with the outer loop power control of the SRNC, as the transmitted power will not become higher than with the value configured by the RNC, and the serving RNC (SRNC) has no meaningful information for an own target adjustment on the inactive link.

According to a fourth aspect of the invention, a stable connection on UL DPCCH is maintained. The reduction of transmission power as mentioned above incurs an increased risk of "losing the connection" due to erroneous detections of received power control commands in uplink as well as in downlink. In order to prevent such loss of connection, additional measures according to the invention for improving the robustness while transmitted at reduced power are given in the following.

When reducing the target SIR, the serving base station shall apply a local outer loop power control that incrementally adjusts the target SIR according to the detection quality of the TPC commands received on the UL DPCCH. If the downlink is still active, i.e. HS-DPCCH has not been switched off, this outer loop shall also consider the detection quality of CQI and ACK/NACK information received on HS-DPCCH (which are transmitted at RNC-configured power offsets from the UL DPCCH). When increasing the target SIR, the outer loop procedure shall take the last RNC-configured value as an upper limit to avoid possible conflicts with the intentions of RRC.

Further measures are concerned with the inner loop power control behavior in the user terminal and require that the user terminal is notified of the reduced power mode. This notification can again be achieved by physical layer signaling, using another new message on HS-SCCH (as described above). When receiving such message, the user terminal shall
a) modify its uplink power control by applying a higher stepsize when receiving a "power up" command on the DL DPCCH. This will automatically increase the UL DPCCH power, when the error rate on the DL DPCCH increases and thus random TPC commands are detected.
b) modify its downlink power control similar to DPC_MODE 1, i.e. repeating TPC commands on UL DPCCH (for the downlink) in multiple successive slots. This achieves a higher detection reliability in the base station at the expense of a slower power adjustment to changing channel conditions. Nevertheless, this is assumed to be acceptable during idle mode where less transmission power is used. This feature requires a corresponding modification in the serving base station's inner loop power control as well to correctly interpret the received sequence of power control commands.

Note, that such modifications in the power control behavior would not be signaled to the SRNC and therefore also not be known to other base stations in the active set in case of soft handover. Further implications in soft handover situations will be discussed below.

According to a fifth aspect of the invention, a reactivation from the reduced control power mode and/or switching on the CQI reporting again, is triggered by the arrival of new data in the MAC queues at either end of the radio link. While new data in the MAC-hs buffer is detected immediately in the serving base station, new data in the MAC-e buffer will first be detected in the user terminal and must thus be brought to the attention of the serving base station. It is therefore proposed that the user terminal immediately transmits a non-scheduled transmission on E-DPDCH with a rate request and/or a non-scheduled MAC-e PDU, as it would do in the normal E-DCH configuration.

Note, that the E-DPDCH and E-DPCCH are transmitted with a given offset from the DPCCH power, and will thus also be reduced in power if the DPCCH is. As a mere trigger for reactivation it is, however, not necessary that the initial transmission is detected correctly at the receiving base station, but it is sufficient that signal presence on E-DPDCH (or E-DPCCH) is recognised by the base station at all. For better robustness of this reactivation trigger, a preconfigured positive power offset could be applied, e.g. 1-3 dB (but only for the first transmission on E-DPCCH and E-DPDCH in the reduced control power mode).
As an alternative, it would be even more efficient to concentrate the transmission power into a single bit (or small bit sequence) instead of the entire packet (data, header etc). The base station would then be able to detect this bit with a very high reliability and initiate the reactivation procedure, whereas no interference would be produced by the packet. One possibility would be to specify an extra message on the E-DPCCH. Alternatives are to transmit just the E-TFC, or just to set the "Happy bit". Note that the base station is aware of the low power mode, and hence would not misinterpret this indication.

According to a sixth aspect of the invention, whenever the serving base station detects the condition for reactivation, it sends a signaling message to the user terminal (via HS-SCCH) to trigger the restart of CQI reporting. The message could be the same as the one used for the switching-off, by interpreting it as a toggle message, or a different one out of the 8 available. On receiving this message, the user terminal reacts by immediately restarting the CQI reporting using the last RNC-configured reporting cycle. The base station delays scheduling of the new transmission until the first CQI report is received. Nevertheless, in case of long CQI reporting cycles, this delay might become too long. In such configurations, the CQI reporting need not be switched off at all, as continued reporting does not create much noise rise, anyway.

According to a seventh aspect of the invention, when the serving base station recognises a new transmission on E-DPCCH and/or E-DPDCH from the user terminal being in reduced control power mode, it starts the reactivation by resetting the target SIR for the uplink power control to the last RNC-configured value and switches off its local outer loop for the adjustment to this target value. The inner loop power control will automatically re-adjust the transmit power on the UL DPCCH to the new target within a few slots, depending on the delta between the old and new targets.

If the robustness modifications have been implemented as suggested above, the base station would also send a reactivation message to the user terminal (again, via HS-SCCH, with the same or a different message as used for the deactivation), and the user terminal would respond to it by restoring the modifications of the power control behavior on the uplink and downlink DPCCH to their original mode, i.e. as configured by the RNC.

Note, that retransmission of the first packet as well as possible subsequent transmissions of (non-scheduled) MAC-e PDUs (Packet Data Unit) will be executed automatically by the normal HARQ and E-DCH protocols in the user terminal and serving base station. Depending on the length of the TTI (Transmission Time Interval), it may take one or a few TTIs until the power control has settled on the normal level and transmissions proceed as normal. The base station should delay rate grants to the user terminal until the received signal power has reached the target SIR in order to avoid early erroneous transmission of large scheduled PDUs.

According to an eighth aspect of the invention, the impact on cell changes and soft handover is regarded. Periodic measurement reports from the user terminal and RNC-triggered signaling of changes in the active set and the serving base station will be transmitted on SRB over E-DCH and HS-DSCH, and thereby trigger reactivation.

The practical applicability and efficiency of the proposed concept relies on a sufficiently long reporting and update period of such mobility measurements and states, i.e. well above the timeout parameter that triggers the power mode switching.

The on- and off-switching of the CQI reports is not affected by soft handover, as soft handover is not applied on HS-DPCCH. However, the uplink and downlink DPCCH may be operated in soft handover mode with multiple power control loops with multiple base stations in the active set. As only the serving base station is aware of the modified power control behavior, while the SRNC and the other base stations in the active set are not, there may occur an "asymmetric" behavior of the various power control loops, which would affect the efficiency but not the robust function of the power control during soft handover.

As long as the target SIR of the serving base station is lower, it will automatically dominate the uplink control loop, i.e. by reducing the power level. When the lower target SIR can not be be achieved anymore, the outer loop of the serving base station adjusts the target up to the RNC-configured value, which is also applied by the other Node Bs.

While operating with equal target SIR in soft handover mode, the higher stepsize for uplink power control as well as the modified TPC transmission mode (which may be wrongly interpreted by the non-serving base stations in the active set) lead to an increased variance of the received power, which may slightly reduce the power efficiency, but should not harm the robustness of the connection.

Also, when the user terminal leaves the serving base station's range while in soft handover and still in reduced power mode, reactivation will be triggered by a corresponding measurement message from the user terminal. Such message will be detected by another base station of the active set if the reactivation trigger cannot be recognised by the serving base station. This will initiate a serving cell update involving higher layer signaling from the RNC to the user terminal. On receiving this message, the user terminal will cancel the serving role of the old serving base station and restore the normal power control behavior, i.e unless the former serving base station is entirely removed from the active set, but which would also eliminate the corresponding power control loop. In the same way, the former serving base station is informed of the serving role change usingn the NBAP signaling, and will react by restoring or eliminating its power control loop with the user terminal.

If the proposed concept were introduced as a mandatory feature for all base stations, a serving cell change could alternatively be handled in the following way: on receiving the serving cell update message from RNC, the user terminal would continue its modified power control behavior instead of restoring it to the normal mode, and the new serving base station would detect the terminals current power control mode (e.g. by observing the received power in relation to the transmitted TPC commands). On detecting reduced control power mode, the base station would itself change into that mode and reduce the user terminal's target SIR.

In the following, the expected impact on performance of the system is discussed.

### Performance Gain

The gain that can be achieved by a power reduction of the uplink control channels for inactive users can best be measured by the number of inactive user connections that can be maintained within a given portion of the allowed noise rise. This portion must be limited (e.g. to 20%), as it reduces the resources available for user data transmission. The reference for this 20% portion is the total allowed noise rise for the data traffic of (simultaneously) active users, which determines the cell throughput. Note, that this reference itself decreases with a growing number of simultaneously active users, as these occupy an increasing part of the noise rise budget with their full (non-reduced) control channel power.

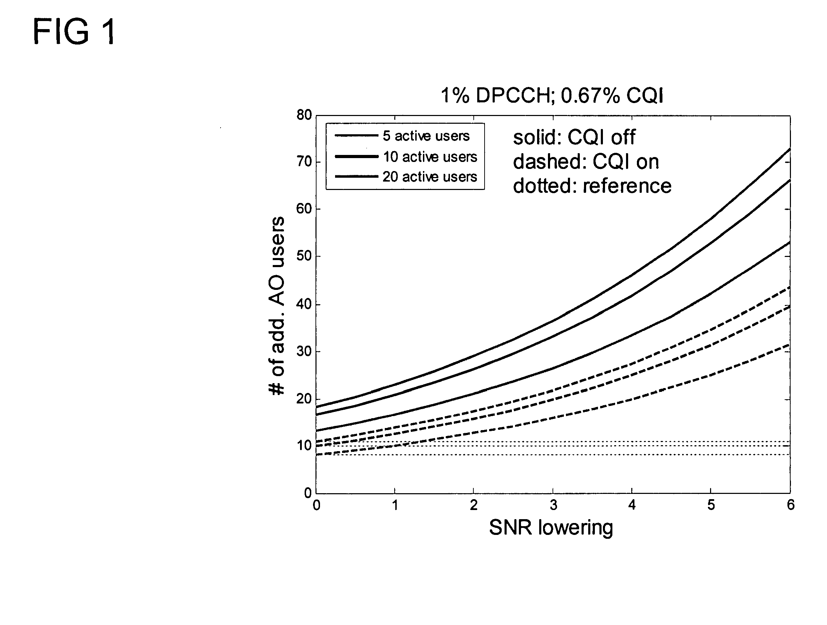

FIG 1 shows the number of inactive users that can be maintained with their (reduced) uplink control channels within 20% of the noise rise budget that is available for user traffic, when assuming a given number (5, 10 or 20) of simultaneously active users. The three sets of curves represent the reference case (where the inactive users require the same control channel power as the active ones), and the two margin cases of the proposed control power reduction scheme (where only the UL DPCCH is operated at lower SIR target while CQI reporting is continued at the shortest cycle, and where additionally the CQI reporting is switched off).

For the non-reduced control channel power of active users, we use the rather conservative assumption from the introductory example. Along each curve, the assumed reduction of the SIR target for inactive users is increased from zero up to 6 dB. The results show a gain of factor 2 - 3 in the number of inactive users for the relevant range of 3 - 6 dB power reduction. When the CQI is switched off (from the shortest cycle), 40 - 75 users can be supported, while maintaining the spectral efficiency of a scenario with 5 continuously transmitting high data rate users.

It must be emphasized, that an exploitation of these gains requires awareness of the RNC, which must consider it in decisions for call admission and channel-type switching. This does not mean that every change of a user's uplink control mode must be reported - actually, this should be avoided to allow fast reactivation - but at least the accumulated gains from the reduced power mode must be regularly reported from the base station to RNC.

### Reactivation Delay

In exchange for the higher number of users in reduced control power mode, it takes longer to restart data transmissions from that mode, as it is first necessary to restore the normal control channel operation. A quick estimation makes clear that the additional delay (before normal scheduling and transmission behavior of E-DCH or HS-DSCH applies) is well below 50 ms (even in the worst case).

For downlink reactivation, the trigger message must be transmitted to the user terminal via HS-SCCH and the first CQI report must be received by the serving base station. Assuming that the HS-SCCH is not operated at its load limit, the trigger message to the user terminal should be transmitted to the user terminal within few TTI cycles. CQI reporting will then be restarted with some additional delay (depending on the configured reporting cycle), before the first downlink transmission can be scheduled. Note, that if the UL DPCCH is operated at reduced power, the first CQI report after reactivation may not be correctly detected. In this case, some adjustment of the control channel power through outer and inner loop power control may be necessary, requiring a second CQI transmission after the power adjustment, which may take a few additional reporting cycles. Note that for long reporting cycles (> 10ms), the CQI reporting need not be switched off, as this would hardly bring any gain. For shorter reporting cycles, the reactivation will certainly take less than 50 ms.

The time for uplink reactivation comprises the transmission of the initial MAC-e PDU, the transmission of the reactivation message on HS-SCCH, the power ramping to the original target SIR, and the waiting time for the first HARQ retransmission at the full power level. In the worst case (10 ms TTI), the total delay is dominated by the HARQ cycle, which allows a retransmission only after 40 ms. The HS-SCCH signaling message and the subsequent power ramping take only few downlink TTIs or power control slots, respectively, and will therefore be finished well before the retransmission time. With 2 ms TTI, the HARQ retransmission cycle is only 16 ms, thus the reactivation can be achieved much faster.

### Signaling Load on HS-SCCH

The proposed concept requires (at most) 4 signaling messages per user for each deactivation cycle. Assuming a maximum of 80 users and an average activation cycle of 20 sec, the average (additional) signaling rate amounts to 4 * 80 / 20 = 16 msg/s. With a capacity of 500 msg/s on a single HS-SCCH, this makes an additional load of 3.2%. Assuming a typical HSDPA configuration with 4 HS-SCCH instances in a cell, the additional signaling load would be only 0.8%. This is practically neglectable and suggests, that even shorter reactivation cycles (< 10 sec) can be supported without significant impact on the downlink performance, and without increasing the number of signaling channels.

The proposed concept may have an impact on the standard by requiring various additions or changes to the current Rel.6 specifications. The following issues are concerned by such changes:
- new signaling messages on HS-SCCH and the corresponding reaction in the receiving user terminal
- possibly, configuration of new parameters and options related with the new feature,
   signaling from SRNC to the base station and/or user terminal, e.g. timeout for deactivation trigger, initial target SIR reduction, modified power control stepsize, enabling of feature options etc.
- introduction of new UE capability.
- the base station should be explicitly allowed to overrule the RNC-configured target SIR for an uplink channel and (at least, temporarily) apply its own target, as long as it respects the RNC-configured value as an upper limit. Such rule may be restricted to situations, where nothing is transmitted on the user terminal's data channels and thus, the SRNC cannot measure an error rate for its outer loop PC.

The proposed concept allows for an interoperability with user terminals and base stations that do not yet support the new feature. In order to apply the control channel power reduction for a given user terminal, the base station should know about the user terminal's capability to support this feature.

In the following, the inventive principles as well as additional aspect of the inventive concept are discussed.

According to the invention, a hold state like approach is taken, where the user terminals release their entire data resources and some of the control resources. In general, the following two mechanisms are proposed:
1. The BS reduces the target SIR for the Closed Loop Power Control. As a consequence, user terminals will reduce their transmit power (without taking notice of any special mechanism) .
2. In the hold state, there is no need to transmit channel state information (CQI) and ACK/NAK (in HSDPA: HS-DPCCH). Therefore, channels carrying this information could be switched off

Either of the two mechanisms can be applied without the other, but they might be implemented together.

The whole procedure can be divided into the following steps:
1. The base station detects that a user terminal shall be shifted to the hold state. Possible triggers are:
   a. No data received in uplink for a timeout
   b. No data in the user terminal buffers for a timeout (if buffer report available)
   c. No data transmitted in downlink for a timeout
   d. No data in the base station buffers of that user for a timeout
   e. Combination of a-d (no data in uplink and downlink buffers)
   The transition could thus be triggered by the uplink, the downlink or by both. Note that an uplink-only trigger would initiate the SIR lowering, a downlink-only trigger would initiate the "CQI off", and a downlink and uplink trigger (logical AND!) would initiate both.
   The value of the aforementioned timeout could be configured by the RNC and signalled over IuB interface, or the timeout could be set by the base station itself.
   In both cases, it might depend on the current load of the cell or the current traffic condition.
2. If the transition is initiated by the uplink (or uplink and downlink), then the base station lowers the target SIR for the uplink closed loop power control
   a. possibly the base station has to inform the central unit
   b. it could be a fixed delta signalled by the RNC over IuB
   c. it could be an open loop technique. Example: Setting the target such that the power control commands for the downlink power control can hardly be detected. If downlink transmission continues, the open loop should consider the CQI and ACK/NAK's as well.
   d. it would be advantageous to inform the user terminal via signalling, that it is in a low power state.
   e. such message could be coded into the HS-SCCH.
   f. upon reception of such message, the user terminal should change its power control stepsize, e.g.
      i. Higher stepsize for "UP" commands; Example: 2dB "UP", 1dB "DOWN"
      ii. Higher stepsize for both "UP" and "DOWN" commands
   g. the user terminal could change the transmission of the TPC commands (on the uplink DPCCH for downlink power control) in a way, that it transmits the same TPC command in two (or multiple) consecutive slots. As a consequence, the base station may combine the consecutive commands and thereby exploits a coherence gain.
   h. the same could be applied to any feedback information (FBI) .
   i. alternatively, the user terminal could code the TPC (and possibly FBI) command into the pilot sequence which is extended to cover the entire slot and into all symbols of one slot, respectively. Example: 2 (4 in case of FBI) different pilot sequences (10 symbols long) are defined, one is interpreted as "UP", the other as "DOWN". The base station would be able to reliably detect the TPC command, and to estimate the channel as well.
   j. if data is still transmitted on the downlink, it is advantageous to increase the relative power of the CQI/ACK/NAK messages (HS-DPCCH). This could be explicitly signalled or by the signalling described above.
3. If the transition is initiated by the downlink (or uplink and downlink), the base station switches off the CQI reporting by signalling to the user terminal.
   a. this could be just a simple trigger message.
   b. the message could be coded into the HS-SCCH.
   c. it might be necessary to inform the RNC.
4. The base station detects that a user terminal has to be shifted back to an active state. Possible triggers are:
   a. downlink data arrives at the base station buffers.
   b. a timeout expires which was started when shifting the user terminal to the hold state
   c. if uplink data arrives at the user terminal buffers, the user terminal has to signal to the base station that it needs to shift the user terminal back to the active state. Amongst others, the following procedures are possible:
      i. it simply starts transmission (in DCH's, non-scheduled transmissions in E-DCH). The first packets will probably be lost. However, as soon as the base station detects a CRC or a header, it is aware of the user terminal requesting state transition. The lost packets will be retransmitted by some ARQ protocol (fast HARQ in E-DCH, RLC ARQ in normal DCH).
      ii. in E-DCH, the user terminal's have to send a rate request (RR) before starting transmission (except non-scheduled transmission). Similar to the above method, the user terminal simply transmits this RR (it need not be aware of the hold state). If the base station does not detect the RR (or at least that a packet was received), it will be retransmitted anyway by the HARQ protocol.
      iii. the retransmission of the RR could be done with a power offset to increase reliability. (in general, hold and active)
      iv. if the user terminal is aware of being in the hold state (receiving one of the described HS-SCCH messages), it can transmit the RR (or the non-scheduled transmission) with a power offset to increase reliability (already at first transmission).
      v. instead of a full RR, the user terminal could only send the E-DPCCH and omit the transmission of the MAC-PDU. (This would save interference produced by the E-DPDCH, the MAC-PDU would not be detected anyway. The base station would interpret the missing PDU as failed detection). The signalling on E-DPCCH could be achieved in different ways
         1. specifying a new message type on E-DPCCH
         2. transmitting only the E-TFC
         3. transmitting only the Happy Bit
         Note that the base station is aware of the low power mode, and hence would not misinterpret this indication.
      vi. the DPCCH power could also be lifted to improve channel estimation for the data for the duration of the data packet. This could be done either
         1. continuously (ignoring the received transmission power control (TPC) commands, e.g. for 2ms TTI)
         2. alternating between the lifted power (ignoring the corresponding TPC commands) and the "normal" power controlled by the power control (following the corresponding TPC commands)
            (this would generate less interference for a 10ms TTI)
      vii. an explicit trigger could be defined (contention-based or dedicated), i.e. a particular signal sent by the user terminal and interpreted by the base station to initiate the transition.
5. The base station increases the target SIR in case it was previously reduced
   a. the first TPC commands could be transmitted with a positive power offset to increase the reliability. (on F-DPCCH, for uplink power control).
   b. furthermore, TPC command "UP" could be transmitted, irrespective what has been measured.
   c. the target SIR could be set to the old value, or to an update received from the RNC in the meantime.
   d. it might be necessary to inform the RNC.
   e. in order to decrease the probability for "loosing" the user terminal (uplink closed loop power control) and to further increase the reliability, it is advantageous to signal a trigger message to the user terminal ("emergency trigger"). Then the user terminal knows that it shall be shifted from hold to active. Among others, one of the following reactions can be defined:
      i. Increase the power by a fixed offset at once.
      ii. Replace subsequent power control commands by "UP" for the next few slots.
      iii. Increase the power control stepsize for the "UP" commands (not "DOWN" commands) for limited time interval.
   f. this trigger message could be coded into the HS-SCCH.
   g. it could be the same (toggle) message as that informing the user terminal about its transition to "low power condition", cf. 2.d/e.
   h. alternatively, this message could be used to "re-capture" the power control in case it is lost, i.e. the base station cannot detect the TPC command on the uplink DPCCH (without actually making a transition to "active").
6. The base station switches on the CQI reporting (if it was previously switched off)
   a. this could be just a simple trigger message
   b. the message could be coded into the HS-SCCH
   c. it could be the same message as that switching the CQI off (Toggle message)
   d. it might be necessary to inform the RNC
7. Verification
   It could be advantageous to verify whether the HS-SCCH messages were successfully detected by the user terminal. Possible methods are:
   a. check whether the user terminal follows the UP commands with a higher step size (transition to hold state).
   b. check whether the user terminal follows the UP commands with the normal step size (transition to active state)
   c. check whether the user terminal transmits the same TPC commands in consecutive slots (transition to hold state)
   d. check whether the user terminal transmits different TPC commands in consecutive slots (transition to active state)
   e. check whether CQI's are no longer received (transition to hold state)
   f. check whether CQI's are received again (transition to active state)
   Similar checks may also be applied in case of a serving cell change, where the new serving base station can in this way find out, if the user terminal is in hold or active state.
8. Miscellaneous
   a. when returning to the active state, the base station should delay the uplink/downlink transmission, until the power control is settled with the old target, and until the user terminal measurements (such as CQI) are available again. Alternatively, it could start transmission soon, but using low transport formats.
   b. it would be advantageous to use an uplink DPCCH slot format, which contains many pilots, and possibly no TFCI.
   c. the base station should be explicitly allowed to use a lower target SIR for the closed loop power control than signalled by the RNC, if HSDPA and/or E-DCH is configured and no uplink data is being transmitted (and no DPDCH is configured/present).
   d. if the two mechanisms (switching off of CQI reporting, lower target SIR) are used together, then a single trigger message would be sufficient to trigger both.
   e. all described trigger messages can be coded into the HS-SCCH using values which are not assigned to code signalling. f. the RNC should have awareness of the base station capability to use the hold state, so that its admission control can allow more users entering the system.
   g. we summarize the options for coding the triggers on HS-SCCH messages (8 messages are currently vacant) again:
      i. 1 message: toggles SIR and HS-DPCCH on/off jointly
      ii. 2 messages: toggle HS-DPCCH on/off , toggle "Hold Transition"/"Recovery" (no "Emergency" possible since user terminal would believe itself back to "active")
      iii. 2 messages: toggle HS-DPCCH on/off, indicate "Emergency"/"Recovery" (no hold awareness of user terminal)
      iv. 3 messages: toggle HS-DPCCH on/off, Indicate "Hold Transition", Indicate "Emergency"/"Recovery"
      v. 2 messages: toggle SIR and HS-DPCCH on/off jointly, toggle HSDPA on/off (better for verification)
   h. instead of the HS-SCCH, all the described messages could be sent over the E-AGCH (Absolute Grant Channel) in a similar way.

With the application of the above given inventive concepts, the number of users which can be held in low-latency conditions is significantly increased. Factors between 2 and 5 are possible. This is a very important aspect for existing and future systems for data communication.

In addition, even VoIP (Voice over IP) based systems could benefit from an introduction of a hold state. During a talk via a user terminal, there are always situations where one party is quiet for several seconds. Here, it is very obvious that a channel release/setup procedure definitely does not fulfil the VoIP delay requirements. In a VoIP centric system, the number of users is typically very large and the amount of interference produced by their control channels is high. Hence a significant increase in the number of supportable users is expected here as well.

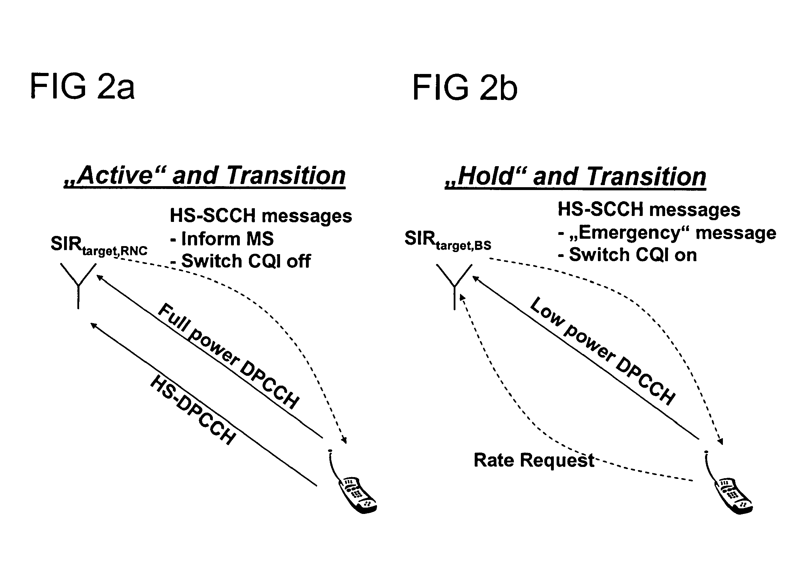

Figures 2a and 2b show examples the inventive concept, and in which the following definitions for the individual states and transitions of states, respectively, are given.

### "Active"

FIG 2a depicts the "normal" operation ("active") in HSDPA (and E-DCH). The user terminal transmits the DPCCH and the HS-DPCCH, the power is controlled by the closed loop PC in the base station using the SIRtargetRNC signalled by the RNC.

### "Transition Active to Hold"

If the base station detects that there is no traffic on the uplink, it lowers the target SIR to SIRtargetBS, and the user terminal automatically reduces its power on the DPCCH (and thereby on the HS-DPCCH as well). The base station might inform the user terminal via an HS-SCCH message that it is moved to the hold state

On top, if there is no traffic in downlink, the base station could switch off the HS-DPCCH transmission via HS-SCCH signalling. The user terminal will stop transmission of the HS-SCCH and thereby will reduce the produced interference.

### Hold State:

In the hold state, the user terminal transmits the DPCCH with a lower power and/or does not transmit the HS-DPCCH. The base station adjusts the new SIRtargetBS by observing the detection of the TPC command on the uplink DPCCH, and possibly of the HS-DPCCH as well (if downlink transmission continues).

Note that by reducing the target SIR, there is a risk of "loosing" the power control. The base station will be aware of that, since it is no longer able to detect the TPC command for adjusting its own power. In this case, it can send the "emergency message" which forces the user terminal to increase its power, so that the TPC command for downlink power control can be detected again. The base station might slightly increase the SIRtargetBS, and the closed loop power control will settle at this value.

Note as well that the user terminal is not necessarily informed about being in a hold state. This is only the case if it has been explicitly informed by a trigger message.

### "Transition Hold to Active"

If the user terminal intends to transmit data, it first has to make the base station aware of it. In E-DCH, it will transmit a rate request (or a full MAC-e PDU), which is included in the header of a MAC PDU on the E-DPDCH. The base station just has to detect that a PDU has been sent. Alternatively, it may send a signalling message on E-DPCCH. Then, it can initiate the procedure given below to move the user terminal back to the active state. The RR probably cannot be detected, as the transmit power was too low. So, it will be retransmitted, and the retransmission benefits from the so called chase combining or incremental redundancy used in connection with HARQ mechanisms, and from the fact that the correct power will at least partly be restored.

The reduced SIRtargetBS has to ensure, that an uplink PDU will at least be somehow detected by the base station. By using normal DCH operation, the user terminal will start data transmission. After that, the proposed concept relies on higher layer retransmission of the first packets, which might be critical for delay requirements. If the user terminal is aware of being in the hold state, it can transmit the first packet(s) with a small power offset (e.g. 2-3dB) to ensure detection by the base station.

If the user terminal intends to transmit data, the base station has to increase the target SIR to the last value signalled by the RNC SIRtargetRNC. The user terminal's power will automatically follow through the closed loop power control. To render this procedure more reliable, a kind of "emergency trigger" could be sent on the HS-SCCH which accelerates the settling to the new (actually old) target, and to make it more robust. The user terminal will react by replacing a fixed number of subsequent TPC commands with "UP", or by increasing the transmit power by a fixed offset, e.g. 3dB. Note that the base station is aware of this behaviour and can include it into its scheduler decision.

In both cases, user terminal and base station initiated, the scheduler in the base station should delay the assignment of resources to the corresponding user terminal until the power control loop is settled and the CQI measurement is available.

## Claims

1. Method for reducing interference in a radio communication system, wherein
at least one data channel (DPDCH) for transmitting to and/or from a user terminal and at least one associated control channel (DPCCH) are established between said user terminal and at least one base station of the radio communication system,
**characterised in that**
when it is detected that no data is to be transmitted on the data channel, the transmission power of the associated control channel (DPCCH) is reduced and/or a transmission of at least one parameter (CQI) relating to determined channel characteristics is stopped.

2. Method according to claim 1, wherein
the reduction of the transmission power is effected in said user terminal and controlled by said at least one base station.

3. Method according to claim 2, wherein
said at least one base station uses physical layer signalling for controlling said user terminal's behaviour regarding said transmission power for said associated control channel.

4. Radio communication system, comprising at least one base station and at least one user terminal, wherein the at least one base station and the at least one user terminal comprise means for realising the method according to claim 1.

5. User terminal, comprising means for reducing a transmission power of a control channel associated with a data channel when no data is scheduled for transmission to/from at least one base station of a radio communication system, and/or comprising means for halting the transmission of at least one determined parameter (CQI) relating to channel characteristics.

6. Base station of a radio communication system, comprising means for signalling to a user terminal the reduction of transmission power of a control channel associated with a data channel when no data is scheduled for transmission, and/or for signalling the halting of transmissions of at least one parameter relating to channel characteristics determined by said user terminal.
